# EUROPÄISCHE PATENTSCHRIFT

(11) **EP 1 954 743 B1**
(45) Veröffentlichungstag und Bekanntmachung des Hinweises auf die Patenterteilung: **20.04.2011**
(21) Anmeldenummer: 06819772.2
(22) Anmeldetag: 27.11.2006
(51) Int. Cl.: C08G 77/58, C08L 83/14, C08L 83/04

(54) **ZU HOCHFESTEN ELASTOMEREN VERNETZBARE IONISCH UND/ODER ORGANOMETALLISCH FUNKTIONALISIERTE SILICONPOLYMERE**
IONICALLY AND/OR ORGANOMETALLICALLY FUNCTIONALIZED SILICONE POLYMERS CROSSLINKABLE TO HIGH-STRENGTH ELASTOMERS
POLYMERES DE SILICONE RENDUS FONCTIONNELS PAR VOIE IONIQUE ET/OU ORGANO-METALLIQUE, ET RETICULABLES EN ELASTOMERES A RESISTANCE ELEVEE

(30) Priorität: 01.12.2005 DE 102005057460
(43) Veröffentlichungstag der Anmeldung: 13.08.2008
(73) Patentinhaber: Wacker Chemie AG, 81737 München (DE)
(72) Erfinder: FUNK, Enno, 84561 Mehring (DE); ACHENBACH, Frank, 84359 Simbach (DE)
(74) Vertreter: Fritz, Helmut
(86) Internationale Anmeldenummer: PCT/EP2006/068941
(87) Internationale Veröffentlichungsnummer: WO 2007/063046

(56) Entgegenhaltungen:
- US-A- 4 495 340
- US-A- 6 124 491
- GOENOWICZ G A ET AL: "SYNTHESIS AND PROPERTIES OF CARBOXYLATE SILOXANE IONOMERS" POLYMERIC MATERIALS SCIENCE AND ENGINEERING, WASHINGTON, DC, US, Bd. 59, 1988, Seiten 1009-1013, XP009081888 ISSN: 0743-0515

## Beschreibung

Die Erfindung betrifft Siliconpolymere mit ionischen und/oder organometallischen funktionellen Gruppen, die über Coulombsche Wechselwirkungen und gegebenenfalls zusätzlich auch über kovalente Bindungen zu hochfesten Elastomeren vernetzt werden können.

Die außergewöhnliche Bedeutung der Silicone als elastomere Werkstoffe beruht sowohl auf ihrer hohen thermischen Belastbarkeit als auch auf ihrer extremen Kälteflexibilität. Sie besitzen ferner eine ausgezeichnete UV-Licht-Stabilität und Oxidationsbeständigkeit. Silicone haben noch eine Vielzahl anderer, in ihrer Kombination einzigartiger Eigenschaften, wie beispielsweise eine niedrige Dielektrizitätskonstante, gute Kriechstrom- und Durchschlagfestigkeit, Hydrophobie, optische Transparenz und Biokompatibilität. Die Shore-Härte von Siliconelastomeren lässt sich in einem weiten Bereich einstellen.

Siliconelastomere kommen daher in zahlreichen Industriesegmenten in einer Vielzahl von Anwendungen zum Einsatz. Im Automobilbau finden sie beispielsweise als Schwingungs- und Resonanzdämpfer, Auspuff- und Katalysatoraufhängungen sowie beispielsweise als Motorlager Verwendung. Weitere Anwendungen sind Rollerpumpenschläuche im Medizinbereich, Membranen, Ventile, Dichtungen sowie beispielsweise Isolatoren und Kabelendverschlüsse im Hochspannungsbereich.

In ihren mechanischen Eigenschaften, wie beispielsweise der Zug-, Weiterreiß- und Abriebfestigkeit sind Siliconelastomere jedoch anderen organischen Elastomeren unterlegen. Für technische Anwendungen kommen daher nur Siliconelastomere in Frage, die mit Füllstoffen, insbesondere hochdisperser Kieselsäure, verstärkt sind. Selbst dann sind die zuvor genannten Festigkeiten vergleichsweise gering.

Eine Möglichkeit, die mechanische Festigkeit eines polymeren Materials zu verbessern, besteht allgemein in der Einführung ionischer Gruppen, wie dies beispielsweise in Kirk-Othmer, Encyclopedia of Chemical Technology, 4th ed., Vol. 14, pp. 815 - 829 (1995) beschrieben ist.

Siliconelastomere, die durch Vernetzung ionischer und/oder organometallischer Polymere entstehen, sind bisher kaum bekannt. In derartigen Siliconelastomeren können neben ionischen und/oder organometallischen Bindungen auch zusätzlich kovalente Bindungen enthalten sein, wie dies beispielsweise bei klassischen Ionomeren der Fall ist. Weiterhin sind Siliconpolymere bekannt, die ionische oder organometallische Funktionen enthalten, die jedoch nicht zu hochfesten Elastomeren vernetzt wurden.

Die Patentschrift US 6,783,709 beschreibt selbstheilende Organosiloxane, die reversible und energiedissipative Vernetzungsdomänen enthalten. Dabei werden lineare Polydimethylsiloxane mit seitenständigen Oligoglycingruppen hergestellt. Die erhaltenen gelartigen Massen haben selbstheilende Eigenschaften, wobei unter Selbstheilung ein nach dem Zerschneiden des Gels erfolgendes Zusammenwachsen der wieder in Kontakt gebrachten Schnittflächen verstanden wird. Die hierfür verantwortlichen, durch nicht kovalente Wechselwirkung ausgebildeten Vernetzungspunkte haben eine Bindungsfestigkeit von mindestens 50 und höchstens etwa 1.000 pN, was diese als nicht spezifische (London-, Keesom- und Debye-Kräfte) und H-Brücken-Wechselwirküngen charakterisiert. Die weiterhin offenbarten Ionomere als Vernetzer-Komponenten werden chemisch nicht spezifiziert. Somit ist es nicht ersichtlich, ob es sich um organische oder Siliconionomere handelt. Die Struktur dieser Ionomere wird als unkritisch beschrieben. Vielmehr können diese in ihrer chemischen Zusammensetzung, Ladungsdichte und Größe variieren, sofern die beanspruchten Siliconzusammensetzungen jeweils Ionomere enthalten, die entgegengesetzte Ladungen aufweisen. Beschrieben werden gegebenenfalls kovalente Netzpunkte enthaltende Massen, jedoch keine kovalent vernetzbaren Siliconzusammensetzungen. Die mechanischen Eigenschaften dieser Ionomere bzw. daraus gewonnener Produkte werden nicht weiter beschrieben.

In den Patentschriften CA 2,309,486 und CA 2,274,040 werden Silicone beschrieben, die über ein hydrophobes Polysiloxan-Rückgrad und mindestens eine hydrophile Gruppe verfügen, die kovalent an das hydrophobe Polysiloxan-Rückgrad gebunden ist. Bei den hydrophilen Gruppen handelt es sich um Chelatliganden mit mindestens zwei Carbonsäurefunktionen. Die Vertreter dieser Verbindungsklasse gehen auf substituierte Malonsäure und N-substituierte Iminodiessigsäure sowie beispielsweise eine Vielzahl von Strukturvarianten der letztgenannten Verbindung oder allgemein auf EDTA-analoge Verbindungen zurück. Diese chelatfunktionenellen Silicone werden als Metall- bzw. Metallion-bindende oder oberflächenaktive Substanzen verwendet. Die beschriebenen Silicone stellen keine kovalent vernetzbaren Siliconzusammensetzungen dar.

Die Herstellung und Eigenschaften von Carboxylat-funktionellen Siloxan-Ionomeren wird in G. A. Gornowitz et al., Polym. Mater. Sci. Eng. 59, 1009-1013 (1988) beschrieben. Dabei handelt es sich um Polysiloxane mit Carbonsäurefunktionen in der Seitenkette und den entsprechenden Salzen von Ionen der Metalle Lithium, Zink, Titan, Blei und Calcium. Dabei ist zu erkennen, dass die Polysiloxane enthaltend Ionomere im Vergleich zu den entsprechenden funktionellen Polymeren enthaltend reine Carboxylatgruppen, also ohne Metallgegenionen, zwar höhere Reißfestigkeiten aufweisen, jedoch gleichzeitig sehr geringe Reißdehnungen haben, also sehr spröde Materialien sind, deren Verwendung als Elastomer nur sehr bedingt möglich ist.

Härtbare Elastomerzusammensetzungen werden erstmals im Patent US 3,047,528 beschrieben. Diese Zusammensetzungen umfassen Carboxyalkylgruppen enthaltendes Polysiloxan, einen Füllstoff, wie beispielsweise Kieselsäure, und als Härtungsmittel polyvalente Metallverbindungen, d.h., die Vernetzung zu einem Elastomer erfolgt ausschließlich durch Netzpunkte, welche durch Coulomb'sche Wechselwirkung zwischen den Metall- und Carboxylationen zustande kommen. Die erzielten mechanischen Festigkeiten liegen jedoch weit unter den Werten von heute üblichen Siliconelastomeren. Die Patentschrift US 3,248,409 offenbart zudem polyvalente Metallsalze von Carboxyalkylfunktionellen Polysiloxanen, die zur wasserabweisenden Ausrüstung textiler Stoffe verwendet werden.

Polydimethylsiloxane mit seitenständigen Carbonsäuregruppen, wie beispielsweise auch die entsprechenden Zink-Ionomere, werden von Klok et al., J. Polym. Sci., Part B, Polym. Physics 37, 485-495 (1999) beschrieben. Dabei wird die reversible Gelierung von Polydimethylsiloxanen mit ionischen und Wasserstoffbrücken bildenden Substituenten beschrieben.

Beispiele für flüssigkristalline Polysiloxane und Ionomere mit Sulfonsäuregruppen in der Seitenkette sind in B. Zhang et al., J. Appl. Polym. Sci. 68, 1555-1561 und in J. Hu et al., J. Appl. Polym. Sci. 80, 2335-2340 (2001) offenbart. Dabei wird der Einfluss der Ionenaggregation auf die mesomorphen Eigenschaften und die thermischen Eigenschaften der erhaltenen, flüssigkristallinen Polymere untersucht. Die mechanischen Eigenschaften werden nicht beschrieben.

In der europäischen Offenlegungsschrift EP 1 264 865 A1 werden Siliconzusammensetzungen mit verbesserter Adhäsion (Haftung) und daraus hergestellte, gehärtete Siliconprodukte beansprucht. Es handelt sich dabei um additionsvernetzbare Siliconkautschukmassen, die einvulkanisierbare Titan- oder Zirconium-Komplexe von beta-Ketocarbonylverbindungen als Haftvermittler enthalten. Letztere können optional Siloxanreste mit einem mittleren Polymerisationsgrad von 0 bis 20 enthalten.

Unter den organometallischen Verbindungen kommen Metallocenen, insbesondere Ferrocen, besondere Bedeutung zu. Die deutsche Offenlegungssschrift DE 14 95 970 A1 beschreibt ein Polysiloxan, das Metallocengruppen enthält. Ferner wird ein HTV-Vulkanisat beschrieben, dass ein derartiges Ferrocen-Siloxan-Copolymer als Hitzestabilisator enthält.

Z. Huang et al., J. Appl. Polym. Sci. 83, 3099-3104 (2002) beschreibt die Ionenaggregation von Polysiloxan-Ionomeren mit lateral gebundenen, quarternären Ammoniumgruppen. Dabei handelt es sich um bei Raumtemperatur flüssige Verbindungen, die nicht zu Elastomeren vernetzt werden.

Ausgehend von Amino-funktionellen Siloxanen können durch Umsetzung mit Propansulton Zwitterionomere erhalten werden, wie dies beispielsweise in D. Gravier et al., J. Polym. Sci., Polym. Chem. Ed., 17, 3559-3572 (1979) beschrieben ist. In Abhängigkeit von der Konzentration der ionischen Gruppen werden leichte gummielastische Eigenschaften beobachtet oder flexible Materialien erhalten. Die mechanischen Festigkeiten sind allgemein gering und entsprechen nicht dem Stand der Technik von heute üblichen Siliconelastomeren.

X. Yu et al., J. Polym. Sci., Part B, Polym. Physics 24, 2681-2702 (1986), beschreibt Blockcopolymere aus zwitterionomeren Polysiloxanen und Polyurethanen. Die mechanischen Eigenschaften der erhaltenen Elastomere sind um so besser, je höher der Anteil am Polyurethansegment ist und je mehr ionische Funktionalität im Polysiloxansegment vorliegt. Die reinen Polysiloxan-Zwitterionomere ohne einen Gehalt an Urethancopolymer zeigen jedoch nur geringe mechanische Festigkeiten.

Es bestand die Aufgabe, zu hochfesten Siliconelastomeren vernetzbare, geeignet modifizierte Organopolysiloxane bereitzustellen. Überraschend wurde gefunden, dass ionisch und/oder organometallisch funktionalisierte Organopolysiloxane sich zu Siliconelastomeren mit extremer mechanischer Festigkeit vernetzen lassen. Ferner können hochfeste Siliconelastomere auch "in situ" durch Umsetzung von Organopolysiloxanen mit geeignet funktionalisierten, ionisch und/oder organometallisch funktionalisierten Additiven erhalten werden. Zusätzlich zu den durch Coulomb'sche oder koordinative Wechselwirkung zustande kommenden Netzknoten der geeignet modifizierten Organopolysiloxane kann, was bevorzugt ist, eine kovalente Vernetzung erfolgen. Im Stand der Technik werden ionisch und/oder organometallisch funktionalisierte Silicone nur in wenigen Fällen zur Herstellung von vernetzten Produkten verwendet. Dort, wo überhaupt die Herstellung von Elastomeren beabsichtigt ist, wird eine nur geringe mechanische Festigkeit beobachtet. Die erfindungsgemäßen Siliconelastomere enthalten einen besonders hohen Anteil an Organopolysiloxan und unterscheiden sich dadurch insbesondere von Siliconblockcopolymeren, wie sie beispielsweise in J. Polym. Sci., Part B, Polym. Physics 24, 2681-2702 (1986) beschrieben sind.

Im Gegensatz zu organischen Elastomeren, wie beispielsweise den aus Naturkautschuk hergestellten Elastomeren, besitzt das bevorzugt eingesetzte Polydimethylsiloxan einen niedrigen Schmelzpunkt (- 45°C) und eine extrem niedrige Glasübergangstemperatur (-125°C), was letztlich in der hohen Flexibilität der Polydimethylsiloxankette begründet ist. Der niedrige Schmelzpunkt bedingt, dass es trotz ausreichender Symmetrie der Polymerketten eines Siliconelastomers bei Raumtemperatur zu keiner dehnungsinduzierten Kristallisation kommen kann, was die mechanische Festigkeit eines Siliconnetzwerkes erheblich erhöhen würde. Insbesondere sind die (intra- und intermolekularen) Wechselwirkungen zwischen Polydimethylsiloxanketten aufgrund des Abschirmeffektes der Methylgruppen außerordentlich gering. Dies hat zum einen zur Folge, dass bei mechanischer Beanspruchung eines Siliconnetzwerkes die Polymerketten sehr unterschiedlichen Dehngraden sowie Kräften ausgesetzt werden, weil die eine bessere Spannungsdelokalisation herbeiführenden intermolekularen Wechselwirkungen niedrig sind. Zum anderen ist damit verbunden, dass im Falle eines durch mechanische Überlastung erfolgenden Bindungsbruches nahezu die gesamte von der Polymerkette zuvor aufgenommene Deformationsenergie schlagartig an die Netzwerkumgebung abgegeben wird, was zu einem inflatorisch voranschreitenden Weiterreißen und Versagen führt. Die beim Bindungsbruch gebildeten beiden Kettenfragmente relaxieren folglich sehr schnell in den ungedehnten Gleichgewichtszustand zurück, ohne dabei durch chemische oder physikalische Wechselwirkung mit den umgebenden Ketten einen signifikanten Rest an Deformationsenergie zu behalten. Diese primär ungefüllten Siliconnetzwerke verfügen über keinen Mechanismus, der eine zumindest teilweise Selbstheilung mechanisch induzierter Netzwerkdefekte bewerkstelligen könnte. Die mechanische Festigkeit füllstofffreier Siliconelastomere ist daher ausgesprochen niedrig und für die meisten Anwendungen unzureichend.

Nach J. Phys. Chem. A 103, 11355-11365 (1999) erfolgt der mechanisch induzierte Kettenbruch homolytisch, d. h. es entstünden Radikalfragmente. Im Zusammenhang mit der vorliegenden Erfindung wird jedoch davon ausgegangen, dass der mechanische Bindungsbruch von Polydiorganosiloxanen vielmehr heterolytisch erfolgt. Das bedeutet, dass anstatt von Radikalen Polymerfragmente mit ionischer Endgruppe entstehen, was von entscheidender Bedeutung für eine völlig neue Konzeption von hochfesten Silicorielastomeren ist. So wird durch eine ionische Funktionalisierung von Siliconelastomeren die Möglichkeit zu einer besseren Spannungsgleichverteilung innerhalb des Netzwerkes sowie einer Selbstheilung im Fall eines mechanisch induzierten Kettenbruchs gegeben, worauf nachfolgend anhand eines zusätzlich kovalent verknüpften Siliconnetzwerkes näher eingegangen werden soll.

Die mechanische Festigkeit der durch Coulomb'sche Wechselwirkung gebildeten Bindungen liegt im Allgemeinen unterhalb der Festigkeit kovalenter Bindungen, wie beispielsweise der Si-O-Bindung, jedoch weit oberhalb der durch nicht spezifische und H-Brücken-Wechselwirkungen gebildeten Verknüpfungen, die zusammenfassend auch als van-der-Waals-Wechselwirkungen bezeichnet werden. Die Verwendung von mit ionischen Gruppen funktionalisierten Polydiorganosiloxanen führt bei deren kovalenter Vernetzung zu Siliconnetzwerken, die sich dadurch auszeichnen, dass die Polymerketten nicht nur durch die (herkömmlichen) kovalenten Netzknoten verknüpft sind, sondern mittels ihrer ionischen Gruppen zusätzliche intermolekulare Wechselwirkungen eingehen, die sich als ionische Netzknoten verstehen lassen. Bei der Deformation eines solchen Siliconnetzwerkes werden, sobald die im Netzwerk auftretenden Spannungen die mechanische Festigkeit der durch Coulomb'sche Kräfte gebildeten ionischen Netzknoten übersteigt, zunächst die ionischen Netzknoten aufgelöst, wobei noch keine Bindungsbrüche innerhalb des kovalent verknüpften Siliconnetzwerkes erfolgen. Die zum Auflösen der ionischen Netzpunkte notwendige Ladungsseparation führt zur Speicherung von Deformationsenergie im elektrischen Feld. Zudem können die gebildeten, entgegengesetzt geladenen Gruppen der Polymerketten mit entsprechenden Gruppen anderer Polymerketten rekombinieren und damit die ionisch-intermolekularen Wechselwirkungen zwischen den Polymerketten im veränderten Deformationszustand des Netzwerkes entsprechend einer Selbstheilung durch Reorganisation der Netzwerkstruktur wieder herstellen. Des Weiteren können die geladenen Gruppen der Polymerketten chemisch mit benachbarten Siliconketten unter Erhalt der Ladung reagieren. Schließlich wird es bei weiterer Deformation auch zu Bindungsbrüchen innerhalb des kovalent verknüpften Siliconnetzwerkes kommen. In diesem Fall fungieren die ionischen Netzknoten und insbesondere die bei deren Auflösung gebildeten, geladene Gruppen enthaltenden, intakten Polymerketten als Ankerpunkte für die relaxierenden ionischen Kettenfragmente der gerissenen Siloxanketten, wodurch diese lediglich einen Teil der in ihnen gespeicherten Deformationsenergie abgeben können und das Siliconnetzwerk insgesamt eine Selbstheilung erfährt. Die über die ionischen Gruppen bewerkstelligte intermolekulare Wechselwirkung zwischen Polydimethylsiloxanketten sowie die Etablierung des beschriebenen Selbstheilungsmechanismus ermöglichen offenbar die enorme Steigerung der ultimativen Festigkeit der erfindungsgemäßen Siliconelastomere.

Wie bereits ausgeführt wurde, ist eine zusätzliche kovalente Vernetzung der erfindungsgemäßen Siliconionomere bevorzugt, insbesondere deshalb, weil dadurch das für Ionomere bekannte, besonders bei erhöhter Temperatur nachteilig in Erscheinung tretende Kriechen (kalter Fluss) unterbunden wird. Damit der zuvor erläuterte Verstärkungs- und Selbstheilungsmechanismus im Fall der zusätzlich kovalent vernetzten Siliconionomere zum Tragen kommt, ist es notwendig, dass die zwischen den ionischen oder organometallischen Gruppen bestehenden Wechselwirkungen hinreichend stark sind, jedoch nicht die Festigkeit der SiO-Bindung überschreiten, so dass es bei der Deformation des Siliconetzwerks erst kurz vor der Entstehung kovalenter Bindungsbrüche zur Ladungsseparation kommt. Da die mechanische Festigkeit einer Si-O-Bindung, wie beispielsweise in Chem. Phys. Legt. 414 (2005) 132-137 beschrieben, mit ca. 2 bis 4 nN veranschlagt werden kann, sind ionische und organometallische Gruppen bevorzugt, deren mechanische Bindungsfestigkeit mindestens 500 pN, jedoch nicht mehr als 4 nN, besonders bevorzugt zwischen 1 und 2 nN, beträgt. Die mechanische Festigkeit einzelner Bindungen kann mittels Einzelmolekül-AFM (**A**tomic **F**orce **M**icroscopy) experimentell bestimmt werden.

Im Gegensatz zu van-der-Waals-Wechselwirkungen, zu denen u. a. auch Wasserstoffbrückenbindungen gehören, sind Coulomb'sche Anziehungskräfte nicht nur wesentlich stärker, sondern auch um Größenordnungen weiter reichend. Beispielsweise beträgt die theoretische Coulomb'sche Bindungsenergie von positiv geladenem Siliciumatom und negativ geladenem Sauerstoffatom in einem Abstand von 1,64 Angstrom, was dem Bindungsabstand des Siliciumatoms und des Sauerstoffatoms im Polydimethylsiloxan entspricht, - 301 kJ/mol ("Si⁺ - O⁻ - Ionenmodell"). Damit erreichen die durch Coulomb'sche Anziehungskräfte auftretenden Energien den Bereich schwächerer kovalenter Bindungsenergien. So beträgt die Bindungsenergie der Silicium-Kohlenstoff-Bindung zum Vergleich - 306 kJ/mol, was dem vorgenannten Wert nahezu entspricht.

Neben rein ionisch vernetzten Siliconpolymeren weisen insbesondere solche Siliconelastomere extreme mechanische Festigkeiten auf, die neben ionischen Verknüpfungen auch durch kovalente Bindungen gebildete Netzknoten enthalten. Dies ist deshalb kein Widerspruch zu rein ionisch vernetzten Siliconpolymeren, da die in einem Siloxannetzbogen durch heterolytischen Bindungsbruch primär gebildeten Ionenfragmente nach ihrer Trennung und mit fortschreitender Deformation des Elastomers unter der Einwirkung äußerer Kräfte mit Ionen von jeweils entgegengesetzter elektrischer Ladung neue ionische Vernetzungsstellen bilden können. Die verstärkende Wirkung von ionischen und/oder organometallischen Bindungen beruht damit auch auf ihrer Reversibilität. Dagegen ist ein Netzwerk aus reinem Polydiorganosiloxan zu keiner Selbstheilung befähigt. Gegenstand der vorliegenden Erfindung sind somit vernetzbare Siliconkautschukzusammensetzungen enthaltend
- A1): 100 Gewichts-Teile mindestens eines Polydiorganosiloxans der allgemeinen durchschnittlichen Formel (I)

**R¹ₐ R²_{b} R³_{c} R⁴_{d} SiO_{(4-a-b-c-2d)/2}** (I)

worin
R¹ jeweils unabhängig voneinander, monovalente, unsubstiuierte oder halogensubstituierte Kohlenwasserstoffreste mit 1 bis 20 Kohlenstoffatomen, die frei von aliphatisch ungesättigten Gruppen sind und Heteroatome enthalten können,
R² gleiche oder verschiedene, monovalente, aliphatisch ungesättigte, unsubstituierte oder halogensubstituierte Kohlenwasserstoffreste mit 2 bis 20 Kohlenstoffatomen, die Heteroatome enthalten können und einer radikalischen Vernetzung oder einer Hydrosilylierungsreaktion zugänglich sind,
R³ monovalente Reste ausgewählt aus der Gruppe der β- Ketocarbonylverbindungen,
R⁴ divalente Reste der allgemeinen Formel (II)

**R⁵ Lₓ M L_{y} R⁵** (II)

worin
R⁵ divalente, von aliphatischen Kohlenstoff- Kohlenstoff-Mehrfachbindungen freie, unsubstituierte oder substituierte Kohlenwasserstoffreste mit 2 bis 20 Kohlenstoffatomen, die an einer oder an beiden Valenzen über ein Sauerstoffatom verfügen können,
L an R⁵ kovalent gebundene und an M ionisch, organometallisch oder ebenfalls kovalent gebundene, funktionelle Gruppen,
M ein Metallatom, Metallion oder eine ionische Gruppe und
y 0 oder 1 mit der Maßgabe bedeuten, dass für x = 0 oder y = 0 R⁵ direkt an M gebunden ist,
a eine Zahl zwischen 1,6 und 2,0,
b eine Zahl zwischen 0 und 0,2,
c Null oder eine Zahl zwischen 0,001 und 0,2 und
d Null oder eine Zahl zwischen 0,001 und 0,2,
mit der Maßgabe bedeuten, dass bei Abwesenheit von Bestandteil A2 zumindest eine der Zahlen c und d verschieden von Null ist und c+d ≥ 0.001 gilt, .
- A2): 0 - 60 Gewichtsteile mindestens einer ionische, organometallische oder ionische und organometallische Gruppen aufweisende Verbindung der allgemeinen Formel (III)

**R² Lₓ M L_{y} R²** (III)

worin R², L, x, y und M die zuvor beschriebene Bedeutung haben,
- B): 1 - 20 Gewichtsteile mindestens eines Vernetzungsmittels,
- C): 0 - 200 Gewichtsteile verstärkende Füllstoffe oder nicht verstärkende Füllstoffe,
- D): 0 - 100 Gewichtsteile Katalysator und
- E): 0 - 100 Gewichtsteile weiterer Bestandteile ausgewählt aus der Gruppe enthaltend Farbpigmente, Katalysatoren, Inhibitoren, Weichmacher, Lösemittel, Stabilisatoren, flammhemmende Zusätze, Haftvermittler, Siliconharze, Entformbarkeitsadditive, Antistatika, Mikrohohlkugeln, Treibmittel, Abhäsivität regulierende Additive, die thermische oder elektrische Leitfähigkeit erhöhende Additive und deren Mischungen.

In einer weiteren erfindungsgemäßen Ausführungsform werden die ionischen und/oder organometallischen Funktionalitäten nicht direkt durch das Polydiorganosiloxan (A1) eingebracht, sondern als Additiv der vernetzbaren Siliconkautschukzusammensetzung zugesetzt und über Valenzen des Polydiorganosiloxans an dieses in-situ gebunden, so dass intermediär ein Polydiorganosiloxan (A1) der allgemeinen Formel (I) entsteht.

Gegenstand der vorliegenden Erfindung sind weiterhin ionisch, organometallisch oder ionisch und organometallisch funktionalisierte Polydiorganosiloxane (A1) der allgemeinen Formel (I) aufweisend
a) einen mittleren Polymerisationsgrad zwischen 20 und 10.000
b) 0 und 20 Mol-% alkenylfunktioneller Organosiloxy-Einheiten,
c) 0,1 und 20 Mol-% monovalenter ionischer, organometallischer oder ionischer und organometallischer funktionalisierter Organosiloxy-Einheiten und
d) 0,1 und 20 Mol-% divalenter ionischer, organometallischer oder ionischer und organometallischer funktionalisierter Organosiloxy-Einheiten.

Die erfindungsgemäßen Polydiorganosiloxane (A1) haben die allgemeine durchschnittliche Formel

**R¹ₐ R²_{b} R³_{c} R⁴_{d} SiO(_{4-a-b-c-2d)/2}** (I)

wobei a eine Zahl zwischen 1,6 und 2,0, b eine Zahl zwischen 0 und 0,2, c Null ist oder eine Zahl zwischen 0,001 und 0,2 und d Null ist oder eine Zahl zwischen 0,001 und 0,2, mit der Maßgabe, dass zumindest eine der Zahlen c und d verschieden von Null ist, d.h., c+d ≥ 0.001 gilt.

Da der mittlere Polymerisationsgrad zwischen 20 und 10.000 betragen kann, verstehen sich die für Formel (I) gemachten Zahlenangaben so, dass pro Molekül durchschnittlich mindestens ein Rest R³ oder R⁴ vorhanden sein muss.

Die Reste R¹, die gleich oder verschieden sein können, sind monovalente, gegebenenfalls halogensubstituierte oder Heteroatome enthaltende Kohlenwasserstoffreste mit 1 bis 20 Kohlenstoffatomen, die frei von aliphatisch ungesättigten Gruppen sind. Beispiele hierfür sind Alkylreste, wie beispielsweise Methyl-, Ethyl-, Propyl-, Isopropyl-, tert.-Butyl-, n-Pentyl-, iso-Pentyl-, neo-Pentyl-, tert.-Pentyl-, n-Octyl- 2-Ethylhexyl-, 2,2,4 Trimethylpentyl-, n-Nonyl-, und Octadecylrest; Cycloalkylreste, wie beispielsweise Cyclopentyl- , Cyclohexyl-; Cycloheptyl-, Norbornyl-, Adamantylethyl- oder Bornylrest; Aryl- oder Alkarylreste, wie beispielsweise Phenyl- , Ethylphenyl-, Tolyl-, Xylyl-, Mesityl-, oder Naphthylrest; Aralkylreste, wie beispielsweise Benzyl-, 2-Phenylpropyl-, oder Phenylethylrest, sowie beispielsweise halogenierte und/oder mit organischen Gruppen funktionalisierte Derivate der voranstehenden Reste, wie beispielsweise 3,3,3-Trifluorpropyl-, 3-Iodpropyl-, 3-Isocyanatopropyl-, Aminopropyl-, Methacryloxymethyl- oder Cyanoethylrest. R¹ kann auch eine OH-Gruppe sein. Bevorzugte Reste R¹ sind Methyl-, Phenyl- und 3,3,3-Trifluorpropylrest. Besonders bevorzugter Rest R¹ ist der Methylrest.

Die Reste R², die gleich oder verschieden sein können, sind monovalente, aliphatisch ungesättigte, gegebenenfalls halogensubstituierte oder Heteroatome enthaltende Kohlenwasserstoffreste mit 2 bis 20 Kohlenstoffatomen, die einer radikalischen Vernetzung oder einer Hydrosilylierungsreaktion zugänglich sind. Beispiele hierfür sind Alkenyl- und/oder Alkinylreste, wie beispielsweise Vinyl-, Allyl-, Isopropenyl-, 3-Butenyl-, 2,4-Pentadienyl-, Butadienyl- , 5-Hexenyl-, 10-Undecenyl-, Ethinyl-, Propinyl-, und Hexinylrest; Cycloalkinylreste, wie beispielsweise Cyclopentenyl-, Cyclohexenyl-, 3-Cyclohexenylethyl-, 5-Bicycloheptenyl-, Norborneyl-, 4-Cyclooctenyl- oder Cyclooctadienylrest; Alkenylarylreste, wie beispielsweise Styryl-, Styrylethylrest, sowie beispielsweise halogenierte und/oder Heteroatome enthaltende Derivate der voran stehenden Reste, wie beispielsweise 2-Bromvinyl-, 3-Brom-1-propinyl-, 1-Chlor-2-methallyl-, 2-(Chlormethyl)-allyl-, Styryloxy-, Allyloxypropyl-, 1-Methoxyvinyl-, Cyclopentenyloxy-, 3-Cyclohexenyloxy-, Acryloyl-, Acryloyloxy-, Methacryloyl- oder Methacryloyloxyrest. Bevorzugte Reste R² sind der Vinyl-, Allyl-, 5-Hexenyl-, und 10-Undecenylrest. Besonders bevorzugter Rest ist der Vinylrest.

Geeignete monovalente Reste R³ sind beispielsweise

Derivate von β-Ketocarbonylverbindungen, wie beispielsweise der n-Propyl- oder n-Undecylacetessigsäureesterrest (Acetessigsäure-prop-3-yl-ester- oder Acetessigsäure-undec-11-yl-esterrest), 3-n-Prop-3-yl- oder 3-n-Undec-11-ylacetylacetonrest.

Die divalenten Reste R⁴ enthalten ionische und/oder organometallische Funktionalitäten, die im Prinzip ebenfalls aus der Komplexchemie oder der organometallischen Chemie bekannt sind. Bei den divalenten Resten R⁴ handelt es sich um solche der allgemeinen Formel

**R⁵ Lₓ M L_{y} R⁵** **(II),**

worin
- R⁵: einen divalenten, von aliphatischen Kohlenstoff- Kohlenstoff-Mehrfachbindungen freien, gegebenenfalls substituierten Kohlenwasserstoffrest mit 2 bis 20 Kohlenstoffatomen bedeutet, der an einer oder an beiden Valenzen über ein Sauerstoffatom verfügen kann,
- L: eine an R⁵ kovalent gebundene und an M ionisch, organometallisch oder ebenfalls kovalent gebundene, funktionelle Gruppe bedeutet, M ein Metallatom, Metallion oder eine ionische Gruppe bedeutet und
- x: 0 oder 1 ist,
- y: 0 oder 1 ist,
mit der Maßgabe, dass für x = 0 oder y = 0 R⁵ direkt an M gebunden ist.

Beispiele für divalente Kohlenwasserstoffreste R⁵ sind Alkylenreste, wie beispielsweise der Ethylenrest -(CH₂)₂-, der Propylenrest - (CH₂)₃-, der Pentylenrest -(CH₂)₅- oder der Undecylenrest -(CH₂)₁₁-, Aralkylenreste, wie beispielsweise der 4-Ethylenphenylrest -(CH₂)₂-(C₆H₄)- oder der 1, 4-Bis- (ethylen) - benzolrest - (CH₂) ₂- (C₆H₄) - (CH₂) ₂-, Alkylenoxyreste, wie beispielsweise Ethylenoxyrest -(CH₂)₂-O-, Propylenoxyrest - (CH₂)₃-O- oder Undecyloxyrest -(CH₂)₁₁-O-, Dioxyalkylenreste, wie beispielsweise Ethylendioxyrest -O-(CH₂)₂-O-.

Beispiele für funktionelle Gruppen L sind ionische Gruppen und Komplexbildungsliganden wie beispielsweise Carboxylat- -COO⁻, Sulfonat- -SO₃⁻ oder Phosphonatgruppen -P(O)OO²⁻, Iminodiessigsäureanionen -N(CH₂COO⁻)₂, β-Ketocarbonylgruppen, wie beispielsweise in 1 oder 3-Position an R⁵ gebundenes Acetylaceton(anion), mit einer freien Valenz von R⁵ veresterte Acetessigsäure bzw. das entsprechende, delokalisierte Carbanion der Acetessigesterfunktion. L kann auch Cyclopentadienylanion bedeuten sowie beispielsweise Komplexbildungsliganden, wie beispielsweise 3, 4-Dihydroxyphenyl und in 4'-Position an R⁵ gebundener 2,2' : 6,2" -Terpyridinrest. Geeignete Funktionalitäten sind auch quarternäre Ammoniumverbindungen und Ammonium-alkylsulfonat-Zwitterionen sowie beispielsweise Betaine (Ammonium-alkylcarboxylate), wobei in diesem Fall in der oben angegebenen Formel (II) x = 0 ist und die Reste R⁵ mit je einer Valenz direkt an ein Alkyl- oder Aralkyl-substituiertes Stickstoffatom gebunden sind.

Beispiele für Metallatome oder Metallionen M sind Ruthenium-, Eisen-, Cobalt- oder Nickelatom und mehrwertige Metallkationen, wie beispielsweise Mg²⁺, Ca²⁺, Ba²⁺, Fe²⁺ und Fe³⁺, Cu²⁺, Zn²⁺, Al³⁺, Pb²⁺, V³⁺, Ti⁴⁺ oder Zr⁴⁺ oder die neutralen Atome oder Ionen der Lanthanoiden. Es kann sich bei den Metallkationen aber auch um einfach positiv geladene Metallkationen handeln, wie beispielsweise Li⁺ und Na⁺. Des Weiteren kann es sich bei M auch um Alkyl- oder Aralkyl-substituierte Stickstoffatome handeln, wie beispielsweise -N⁺(CH₃)₂-. Da in diesem Fall in Formel (II) x = 0 ist, ergeben sich, wie beispielsweise schon im vorherigen Absatz beschrieben, durch direkte Anbindung von Alkylenresten als divalente Reste R⁵ quarternäre Ammoniumverbindungen und Ammonium-alkylsulfonat-Zwitterionen sowie beispielsweise Betaine.

Beispiele für Kombinationen aus Metallatomen oder Metallionen und funktionellen Gruppen L als Liganden sind Magnesium-, Calcium- und Zinkcarboxylate, Zinksulfonate, Zinkphosphonate, Zirkoniumiminodiacetat, Kupferacetylacetonate, Titan- oder Zirkoniumacetessigester, Eisen(III)-brenzkatechinkomplex, Eisen(II)- oder Ruthenium(II)-2,2' : 6,2" -terpyridinkomplex, Metallocene, wie beispielsweise Ferrocen.

Um die hohe mechanische Festigkeit der erfindungsgemäßen Siliconelastomere zu erreichen, ist eine Mindestfunktionsdichte an ionischen bzw. organometallischen Gruppen erforderlich. Andererseits darf die Funktionsdichte der ionischen und/oder organometallischen Gruppen nicht zu hoch sein, da die elastomeren Eigenschaften dann verloren gehen und das Material versprödet. Die Funktionsdichte an ionischen und/oder organometallischen Gruppen, die an ein Polydiorganosiloxan gebunden sind, liegt vorzugsweise zwischen 0,2 und 20 Mol-%, besonders bevorzugt zwischen 1 und 10 Mol-% und ganz besonders bevorzugt zwischen 2 und 7 Mol-% relativ zu den Diorganosiloxaneinheiten (D-Einheiten) der entsprechend funktionalisierten Polydiorganosiloxane.

Die ionischen und/oder organometallischen Funktionalitäten können nicht nur als ionische und/oder organometallisch funktionalisierte Organopolysiloxane der Formel (I) vorliegen, die durch Reaktion mit geeigneten Metallverbindungen, wie beispielsweise Salzen, wie beispielsweise Chloriden oder Sulfaten, Carboxylaten, wie beispielsweise Acetaten, Alkoxiden, wie beispielsweise Methoxid, Ethoxid, n-Propoxid, iso-Propoxid und n-Butoxid, Hydroxiden und Oxiden unter Entstehung von ionischen Bindungen vernetzen, sondern auch in Form von Additiven vorliegen, die bei einer Vernetzungsreaktion mit einem geeigneten Organosiloxan einvulkanisiert werden. Sowohl Additive als auch Polymere können eine lineare (unverzweigte) Struktur aufweisen oder verzweigt sein.

Ionische und/oder organometallische Additive A2 haben die allgemeine Formel

**R² Lₓ M L_{y} R²** **(III)**

wobei R², L, x, y und M eine der oben angegebenen Bedeutungen haben, mit der Maßgabe, dass die bevorzugten Reste R² in Formel (III) der Vinyl-, Allyl-, 5-Hexenyl-, 10-Undecenylrest und zusätzlich der 10-Undecenyloxyrest sind und L gleich oder verschieden sein kann und eine an R² kovalent gebundene und an M ionisch und/oder organometallisch oder ebenfalls kovalent gebundene Gruppe ist, welche ausgewählt ist aus der Gruppe enthaltend Carboxylate, Carbonate, Sulfonate, Phosphonate, Glycinate, Iminodiessigsäureanionen, Ethylendiamintetraacetate, Bis(salicylat)ethylenbis(imine), Ethylendiamine, 1,3-Propylendiamine, Diethylentriamine, Triethylentetramine, Diphosphane, Diarsane, Triarsane, Dithiolene und Dimethylglyoxime. L kann auch Cyclopentadienylanion bedeuten sowie Komplexbildungsliganden, wie beispielsweise 3, 4-Dihydroxyphenyl und Terpyridine, wie beispielsweise in 4'-Position an R² gebundener 2,2' : 6, 2" -Terpyridinrest, α,α' - Bipyridine, 1,10-Phenanthroline, Porphine, Phthalocyanine, Kronenether oder Kryptate. Des Weiteren kann L auch quarternäre Ammoniumverbindungen und Ammonium-alkylsulfonat-Zwitterionen oder Betaine (Ammonium-alkylcarboxylate) bedeuten, wobei in diesem Fall in der oben angegebenen Formel (III) x und y = 0 sind und die Reste R² mit der freien Valenz direkt an ein Alkyl- oder Aralkyl-substituiertes Stickstoffatom gebunden sind.

Beispiele für Additive der Formel (III) sind Zinkundecylenat; Zirconium-bis(N-10-undecenyl-iminodiacetat), Eisen(II)- oder Ruthenium(II)-bis(4'-undecenyloxy-2,2' : 6, 2" -terpyridin) und Divinylferrocen.

Erfolgt die Vernetzungsreaktion radikalisch, so wird das ionisch und/oder organometallische Additiv A2 der Formel (III) mit einem Polydiorganosiloxan der allgemeinen durchschnittlichen Formel (IV)

**R¹ₑ R²_{f} SiO_{(4-e-f)/2}** (IV)

umgesetzt, worin
- e: eine Zahl zwischen 1,9 und 2,0 und
- f: eine Zahl zwischen 0 und 0,1 ist
und R¹ und R² die in Formel (I) angegebenen Bedeutungen haben.

Als radikalische Vernetzungsmittel können grundsätzlich alle dem Stand der Technik entsprechenden und typischerweise in peroxidisch vernetzbaren Siliconkautschukmassen eingesetzten Peroxide verwendet werden. Beispiele geeigneter Peroxide sind Dialkylperoxide, wie beispielsweise 2,5-Dimethyl-2,5-di(tert-butylperoxi)hexan, Di-tert-butylperoxid, tert-Butyl-tert-triptylperoxid und tert-Butyl-triethylmethylperoxid, Diaralkylperoxide, wie beispielsweise Dicumylperoxid, Alkylaralkylperoxide, wie beispielsweise tert-Butylcumylperoxid und α,α'-di(tert-Butylperoxi)-m/p-diisopropylbenzol, Alkylacylperoxide, wie beispielsweise t-Butylperbenzoat, und Diacylperoxide, wie beispielsweise Dibenzoylperoxid, Bis-(2-methylbenzoylperoxid), Bis-(4-methylbenzoylperoxid und Bis-(2,4-dichlorbenzoylperoxid). Ist in der oben angegebenen Formel (IV) der Wert für den Index f > 0 ist die Verwendung von vinylspezifischen Peroxiden bevorzugt, deren wichtigste Vertreter die Dialkyl- und Diaralkylperoxide sind. Besonders bevorzugt ist die Verwendung von 2,5-Dimethyl-2,5-di(tert-butylperoxi)hexan und Dicumylperoxid. Es können auch Mischungen unterschiedlicher Peroxide eingesetzt werden. Ist in der oben angegebenen Formel der Wert für den Index f = 0, ist die Verwendung von Bis-(2,4-dichlorbenzoylperoxid) besonders bevorzugt.

Der Gehalt an Peroxid in der erfindungsgemäßen Masse aus Polydiorganosiloxan der oben angegebenen Formel (IV) und ionischem und/oder organometallischem Additiv liegt vorzugsweise zwischen 0,1 und 3,0 Gew.-%, besonders bevorzugt zwischen 0,5 und 1,5 Gew.-%.

Eine radikalische Vernetzung durch Elektronenstrahlen oder energiereicher elektromagnetischer Strahlung, wie beispielsweise γ-Strahlung, bevorzugt ⁶⁰Co-Strahlung, ist ebenfalls möglich.

Erfolgt die Vernetzung des Additivs durch Hydrosilylierung, so wird das ionisch und/oder organometallische Additiv mit einem SiH-funktionellen Vernetzungsmittel in Gegenwart eines die Addition der SiH-Bindungen an die endständig ungesättigten aliphatischen Gruppen des Additivs, vorzugsweise Alkenylgruppen, fördernden Katalysators umgesetzt. Das SiH-funktionelle Vernetzungsmittel hat die durchschnittliche Zusammensetzung

**H_{g} R¹ₕ SiO_{(4-g-h)/2}** (V)

worin
- H: Wasserstoffatom bedeutet,
- R¹: die oben angegebene Bedeutung hat und
- g, h: positive Zahlen sind, die die Relationen 0,005 ≤ g ≤ 1 und 0,005 ≤ h ≤ 2 erfüllen,
mit der Maßgabe, dass pro Vernetzermolekül durchschnittlich mindestens 3 Silicium-gebundene Wasserstoffatome vorhanden sind.

Der Wasserstoffgehalt des SiH-funktionellen Vernetzungsmittels dieser sich ausschließlich auf direkt an Siliciumatome gebundene Wasserstoffatome bezieht, liegt vorzugsweise im Bereich 0,002 bis 1,7 Gew.-% Wasserstoff, besonders bevorzugt zwischen 0,02 und 0,8 Gew.-% Wasserstoff. Das SiH-funktionelle Vernetzungsmittel enthält mindestens 3 und höchstens 1000 Siliciumatome pro Molekül, vorzugsweise 4 bis 700 und besonders bevorzugt 20 bis 300 Siliciumatome pro Molekül. Die Struktur des Vernetzungsmittels kann linear, verzweigt, cyclisch oder harz- bzw. netzwerkartig sein. Bevorzugte Vernetzungsmittel sind Poly(dimethylsiloxan-co-methylhydrogensiloxane).

Das Vernetzungsmittel ist vorzugsweise in einer solchen Menge in der vernetzbaren Mischung enthalten, dass das Molverhältnis von SiH-Gruppen zu den endständig ungesättigten aliphatischen Gruppen, vorzugsweise Alkenylgruppen, des ionischen und/oder organometallischen Additivs bei 1 bis 5, insbesondere bei 1 bis 3 liegt. Das Vernetzungsmittel kann auch eine Mischung unterschiedlicher Vernetzungsmittel sein.

Die als Hydrosilylierung bezeichnete Additionsreaktion zwischen den Alkenylgruppen des Additivs und den SiH-Gruppen des

Vernetzungsmittels erfolgt bevorzugt in Gegenwart eines Katalysators. Grundsätzlich können alle dem Stand der Technik entsprechenden und typischerweise in additionsvernetzbaren Siliconkautschukmassen eingesetzten Hydrosilylierungskatalysatoren verwendet werden. Dies sind insbesondere Metalle, wie beispielsweise Platin, Rhodium, Palladium, Ruthenium, und Iridium, sowie sich von diesen ableitende metallorganische Verbindungen. Bevorzugt sind Platin und Platinverbindungen, besonders bevorzugt sind Komplexverbindungen des Platins mit Vinylsiloxanen, wie beispielsweise sym-Divinyltetramethyldisiloxan, auch Karstedt-Katalysator genannt.

Die Menge des eingesetzten Hydrosilylierungskatalysators richtet sich im Wesentlichen nach der gewünschten Vernetzungsgeschwindigkeit sowie ökonomischen Gesichtspunkten. Vorzugsweise beträgt der Gehalt einer erfindungsgemäßen additionsvernetzbaren Mischung aus Vernetzungsmittel und ionischem und/oder organometallischem Additiv an Hydrosilylierungskatalysator zwischen 0,05 und 1000 Gew.-ppm, bezogen auf das darin enthaltene Metall, besonders bevorzugt zwischen 1 und 100 Gew.-ppm, bezogen auf das darin enthaltene Metall.

Eine zusätzliche kovalente Vernetzung von ionisch und/oder organometallisch funktionalisierten Polydiorganosiloxanen der oben angegebenen allgemeinen Formel (I) kann in Analogie zur Vernetzung der zuvor beschriebenen Additive ebenfalls radikalisch oder durch Hydrosilylierungsreaktion erfolgen, wobei die dort beschriebenen Bedingungen in vollkommen gleicher Weise auch hier gelten. Bevorzugt ist die Hydrosilylierungsreaktion (Additionsvernetzung), mit der Maßgabe, dass in der allgemeinen Formel (I) der Zahlenwert des Index b > 0 ist.

Die ionischen und /oder organometallischen Gruppen können an das Polydiorganosiloxan lateral und/oder terminal gebunden sein. Außerdem können die ionischen und /oder organometallischen Gruppen als divalente Einheit in der Hauptkette des Polydiorganosiloxans gebunden sein.

Hochfeste Siliconelastomere können durch Vernetzung von ionischen und/oder organometallischen Polymeren entstehen, aber auch durch Vernetzung von deren Blends mit anderen Polydiorganosiloxanen, die keine ionischen und/oder organometallischen Funktionalitäten aufweisen.

Die eigentlichen ionischen und/oder organometallischen Funktionalitäten sind vorzugsweise über Spacer mit den Netzbögen im Siliconelastomer verknüpft. Diese entstehen beispielsweise bei einer der oben beschriebenen Vernetzungsreaktionen aus den Resten R⁵ in der allgemeinen Formel (II) bzw. aus den Resten R² in der allgemeinen Formel (III).

Der Spacer kann also ein divalenter Kohlenwasserstoffrest, wie beispielsweise eine gegebenenfalls substituierte Alkylenkette C₁ - C₁₀₀, vorzugsweise C₂ - C₂₀ sein, die an einer oder beiden endständigen Valenzen auch ein Sauerstoffatom tragen kann. Abweichend davon kann es sich aber auch um ein Polydiorganosiloxan mit 1 - 100, vorzugsweise 1 - 50 Diorganosiloxaneinheiten handeln, oder beispielsweise ein Polyalkylenoxid, wie beispielsweise ein Polyethylenoxid oder Polypropylenoxid mit 1 - 100, vorzugsweise 1 - 20 Ethylenoxid- bzw. Propylenoxideinheiten sein. Ebenfalls abweichend davon kann der Spacer auch ein Polydiorganosiloxan mit 1 - 100 Diorganosiloxaneinheiten sein.

Zur Bildung einer ionischen und/oder organometallischen Bindung zwischen zwei Netzbögen des Elastomers verfügt die ionische und/oder organometallische Gruppe vorzugsweise über 2 Spacer, damit eine Anbindung an jeden der beiden Netzbögen mit jeweils einem der beiden Spacer gegeben ist. Beispielsweise kann eine ionische und/oder organometallische Gruppe aus einem zweiwertigen Metallion bzw. Metallatom und zwei Liganden mit entgegengesetzter Ladung des Übergangsmetallions handeln. Dann ist jeder Ligand mit jeweils einem Spacer an jeweils einen anderen Siloxannetzbogen gebunden. Sofern es sich um ionische und/oder organometallische Gruppen aus 3- oder höherwertigen Metallatomen oder Metallionen und beispielsweise 3 Liganden handelt, ist jeder Ligand mit einem Spacer an mindestens 2 oder maximal 3 verschiedene Siloxannetzbögen gebunden. Bei den Liganden kann es sich um gleiche oder verschiedene Liganden handeln. Besteht eine ionische und/oder organometallische Gruppe aus einem Metallatom oder Metallion und mehr als 2 Liganden, können auch solche Liganden an das Metallatom oder Metallion gebunden sein, die über keinen Spacer verfügen und die nicht mit dem Siliconnetzwerk verbunden sind.

Sofern die ionischen Funktionalitäten nicht elektrisch neutral sind, umfassen die Reste R³ und R⁴ in der allgemeinen Formel (I) sowie Additive der allgemeinen Formel (III) notwendigerweise eine entsprechende Anzahl von Gegenionen zum Ladungsausgleich. Je nach Ladung der ionischen Gruppen können die Gegenionen Kationen, wie beispielsweise H⁺, Li⁺, Na⁺ oder Ca²⁺, oder Anionen, wie beispielsweise F⁻, Cl⁻, Br⁻, I⁻, BF₄⁻ oder PF₆⁻ sein.

In der Regel werden die ionischen und/oder organometallischen Gruppen koordinativ abgesättigt sein. Es ist jedoch möglich, dass ein Teil der in den erfindungsgemäßen Elastomeren vorliegenden ionischen Gruppen bzw. die über Spacer an das Siliconnetzwerk gebundenen Liganden nicht koordinativ abgesättigt sind, d. h. ohne koordinative Bindung an ein Metallatom bzw. an ein ein- oder mehrwertiges Metallion vorliegen. Die Anzahl derartiger, koordinativ ungesättigter ionischer und/oder organometallischer Gruppen bzw. freier Liganden kann beispielsweise 10, 20, 30 oder mehr als 50 Mol-% der insgesamt vorhandenen ionischen/und oder organometallischen Gruppen ausmachen. Bevorzugt ist aber eine hohe koordinative Absättigung mit weniger als 10 Mol-% koordinativ ungesättigter ionischer/und oder organometallischer Gruppen, besonders bevorzugt ist die vollständige koordinative Absättigung der ionischen und/oder organometallischen Gruppen in den erfindungsgemäßen Elastomeren.

Umgekehrt ist es möglich, dass ein Überschuss an Metallverbindungen, wie beispielsweise Salzen, wie beispielsweise Chloriden oder Sulfaten, Carboxylaten, wie beispielsweise Acetaten, Alkoxiden, wie beispielsweise Methoxid, Ethoxid, n-Propoxid, iso-Propoxid und n-Butoxid, Hydroxiden und Oxiden in den erfindungsgemäßen Elastomeren vorliegt, d. h. es sind mehr dieser Metallverbindungen vorhanden, als zur vollständigen Ausbildung ionischer Bindungen erforderlich sind. Dieser Anteil kann beispielsweise 10, 20, 30 oder mehr als 50 Mol-% der für eine vollständige koordinative Absättigung der ionischen und/oder organometallischen Gruppen erforderlichen Menge an Metallverbindungen ausmachen. Bevorzugt ist aber ein möglichst geringer Überschuss an Metallverbindungen mit weniger als 10 Mol-% überschüssige Metallverbindungen, besonders bevorzugt ist kein Überschuss an Metallverbindungen in den erfindungsgemäßen Elastomeren.

Gegebenenfalls können die erfindungsgemäßen, ionisch und/oder organometallisch funktionalisierten Polydiorganosiloxane bzw. ionisch und/oder organometallisch funktionalisierte Additive enthaltenden, zu hochfesten Elastomeren vernetzbaren Massen Füllstoffe enthalten. Bei diesen Füllstoffen handelt es sich um feinteilige, ggf. oberflächenbehandelte anorganische Feststoffe mit einer spezifischen Oberfläche von mindestens 30 m²/g.

Als Füllstoffe kommen sämtliche üblicherweise in Siliconmassen eingesetzte hochdisperse Füllstoffe mit einer nach BET gemessenen spezifischen Oberfläche von mindestens 30 m²/g, bevorzugt 100 bis 800 m²/g, besonders bevorzugt 150 bis 400 m²/g, in Frage.

Typischerweise handelt es sich um Kieselsäuren, Ruße und feinteilige Oxide, Hydroxide, Carbonate, Sulfate oder Nitride von Metallen, wie beispielsweise Silicium, Aluminium, Titan, Zirconium, Cer, Zink, Magnesium, Calcium, Eisen und Bor.

Die in den erfindungsgemäßen, ionisch und/oder organometallisch funktionalisierte Polydiorganosiloxane bzw. ionisch und/oder organometallisch funktionalisierte Additive enthaltenden, zu hochfesten Elastomeren vernetzbaren Massen bevorzugt einsetzbaren Füllstoffe sind pyrogen hergestellte Kieselsäuren, gefällte Kieselsäuren, unter Erhalt der Struktur entwässerte Kieselsäurehydrogele, auch Aerogele genannt, sowie Ruße. Besonders bevorzugt sind gefällte und pyrogen hergestellte Kieselsäuren.

Ganz besonders bevorzugt sind oberflächenbehandelte Füllstoffe. Die Oberflächenbehandlung kann durch die dem Fachmann wohl bekannten Verfahren zur Hydrophobierung feinteiliger Feststoffe erzielt werden. Die Hydrophobierung kann entweder vor der Einarbeitung in die erfindungsgemäßen, ionisch und/oder organometallisch funktionalisierten Polydiorganosiloxane bzw. ionisch und/oder organometallisch funktionalisierten Additive enthaltenden, zu hochfesten Elastomeren vernetzbaren Massen erfolgen oder auch in Gegenwart dieser Massen nach dem in-situ Verfahren erfolgen. Beide Verfahren können sowohl im Batch-Prozess als auch kontinuierlich durchgeführt werden. Bevorzugt verwendete Hydrophobierungsmittel sind siliciumorganische Verbindungen, die mit der Füllstoffoberfläche unter Ausbildung kovalenter Bindungen zu reagieren vermögen oder dauerhaft an der Füllstoffoberfläche physisorbiert werden.

Bevorzugte Hydrophobierungsmittel entsprechen der allgemeinen Formeln (VIa) und (VIb)

**R⁶₄₋ₓSiAₓ** (VIa),

**(R⁶₃Si)_{y}B** (VIb),

worin
- R⁶: gleich oder verschieden sein kann und einen monovalenten, gegebenenfalls halogensubstituierten Kohlenwasserstoffrest mit 1 bis 18 Kohlenstoffatomen darstellt, A Halogenatom oder -OH, -OR⁷ oder -OCOR⁷ bedeutet und
- B: -NR⁸_{3-y} ist,
- R⁷: einen monovalenten Kohlenwasserstoffrest mit 1 bis 18 Kohlenstoffatomen darstellt,
- R⁸: ein Wasserstoffatom ist oder die gleiche Bedeutung wie beispielsweise R⁷ hat und
- x: 1, 2 oder 3, sowie beispielsweise
- y: 1 oder 2 ist,
oder es handelt sich bei den bevorzugten

Hydrophobierungsmitteln um ein Organopolysiloxan bestehend aus Einheiten der Formel R⁶_{z}SiO_{(4-z)/2}, wobei R⁶ die oben genannte Bedeutung hat und z 1, 2 oder 3 ist.

Hierzu zählen vorzugsweise Alkylchlorsilane, wie beispielsweise Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan und tert.-Butyldimethylchlorsilan; Alkylalkoxysilane, wie beispielsweise Dimethyldimethoxysilan, Dimethyldiethoxysilan, Trimethylmethoxysilan und Trimethylethoxysilan; Trimethylsilanol; cyclische Diorgano(poly)siloxane, wie beispielsweise Otamethylcyclotetrasiloxan, Decamethylcyclopentasiloxan; lineare Diorganopolysiloxane, wie beispielsweise Dimethylpolysiloxane mit Trimethylsiloxy-Endgruppen sowie Dimethylpolysiloxane mit Silanol- oder Alkoxy-Endgruppen; Disilazane, wie beispielsweise Hexaalkyldisilazan, insbesondere Hexamethyldisilazan, Divinyltetramethyldisilazan, Bis(trifluorpropyl)tetramethyldisilazan; cyclische Dimethylsilazane, wie beispielsweise Hexamethylcyclotrisilazan. Es können auch Mischungen der voran stehend genannten Hydrophobierungsmittel eingesetzt werden. Um die Hydrophobierung zu beschleunigen, ist auch der Zusatz von katalytisch wirksamen Additiven, wie beispielsweise Aminen, Metallhydroxiden etc. möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugte Füllstoffe weisen infolge einer Oberflächenbehandlung einen Kohlenstoffgehalt von mindestens 0,01 bis maximal 20 Gew.-%, bevorzugt zwischen 0,1 und 10 Gew.-% und besonders bevorzugt zwischen 0,5 und 5 Gew.-% auf.

Sofern die erfindungsgemäßen, ionisch und/oder organometallisch funktionalisierten Polydiorganosiloxane bzw. ionisch und/oder organometallisch funktionalisierten Additive enthaltenden, zu hochfesten Elastomeren vernetzbaren Massen zusätzlich kovalent vernetzt werden, ist es bevorzugt, dass die oberflächenbehandelten Kieselsäuren einen Gehalt an aliphatisch ungesättigten Gruppen, beispielsweise zwischen 0,01 und 2 Gew.-% Si-gebundene Vinylgruppen, aufweisen.

Die erfindungsgemäß hergestellten Siliconelastomere eignen sich für eine Vielzahl von Anwendungen, in denen neben den bekannten vorteilhaften Eigenschaften der Silicone auch deren mechanische Festigkeit von Bedeutung ist, bevorzugt in den Bereichen des Automobilbaus, der Elektronik/Elektrotechnik, Luft- und Raumfahrt, Medizintechnik, Haushaltsgeräteherstellung, Maschinen- und Gerätebau, Papier- und Folienbeschichtung.

### Beispiele

Nachstehend sind zur Veranschaulichung, keineswegs aber zur Einschränkung, Beispiele für die Erfindung aufgeführt. In diesen Beispielen beziehen sich alle Angaben von Teilen oder Prozentsätzen, falls nicht anders angegeben, auf das Gewicht. Des Weiteren beziehen sich alle Viskositätsangaben auf eine Temperatur von 25°C. Die Plastizität der Polymere wurde mit einem Brabender-Plastograph bei 25°C und 60 Umdrehungen pro Minute bestimmt.

Vi bedeutet Vinylrest und Me bedeutet Methylrest.

### Beispiel 1

Organopolysiloxan A ist ein hochmolekulares Polydiorganosiloxan der Formel (Me₂ViSiO_{1/2})₂(Me₂SiO)ₓ(MeViSiO)_{y} mit x>>y, so dass im statistischen Mittel jedes 2133ste kettenständige Siliciumatom eine Vinylgruppe trägt, entsprechend einem Vinylgehalt von 0,03 Gew.-% CH=CH₂. Aus dem Brabenderwert von 540 - 600 daNm ergibt sich eine mittlere Molmasse von etwa 450 000 g/mol.

In Organopolysiloxan A werden auf einem Laborwalzwerk bei einer Friktion von 1 : 1,1 während 20 Minuten zuerst 8,7 Gew.-% Zinkundecylenat, erhältlich von Sigma-Aldrich Chemie GmbH, und dann während 10 min 1,2 Gew.-% Peroxidvernetzer A, bezogen auf die zuvor hergestellte Mischung von Organopolysiloxan A und Zinkundecylenat, eingearbeitet. Bei Peroxidvernetzer A handelt es sich um eine 45%ige Paste von 2,5-Bis(tert.-butylperoxy)-2,5-dimethylhexan in Siliconöl, erhältlich von Fa. Akzo unter der Bezeichnung Trigonox 101-45 S.

Die so erhaltene, peroxidische Mischung wird anschließend in eine Pressform aus Edelstahl gefüllt und 15 Minuten bei 165°C und bei einem Druck von 5,45 MPa in einer Laborpresse vulkanisiert.

Die nach DIN 53504 - 85 / Normstab S1 gemessene Reißfestigkeit war 2,7 mal so hoch, wie die ebenfalls nach DIN 53504 - 85 / Normstab S1 gemessene Reißfestigkeit des Vulkanisats von Vergleichsbeispiel 1.

Die Reißdehnung des erfindungsgemäßen Vulkanisats aus Beispiel 1 war 2,5 mal so hoch wie die des Vulkanisats aus Vergleichsbeispiel 1.

### Vergleichsbeispiel 1

In Organopolysiloxan A werden auf einem Laborwalzwerk bei einer Friktion von 1 : 1,1 während 10 min 1,2 Gew.-% Peroxidvernetzer A eingearbeitet.

Die so erhaltene, peroxidische Mischung wird anschließend in eine Pressform aus Edelstahl gefüllt und 15 Minuten bei 165°C und bei einem Druck von 5,45 MPa in einer Laborpresse vulkanisiert.

Die Reißfestigkeit wird nach DIN 53504 - 85 / Normstab S1 gemessen.

### Beispiel 2

In Organopolysiloxan A werden in einem Laborkneter (Polylab System, bestehend aus Rheocord 300p und Rheomix 3000p der Fa. Gebrüder Haake GmbH) innerhalb 30 Minuten bei Raumtemperatur 8,7 Gew.-% Zinksulfonat-Additiv A homogen eingeknetet.

Das Zinksulfonat-Additiv A wird wie beispielsweise in den nachfolgend beschriebenen Schritten a) bis e) hergestellt:

### a) Herstellung von N-Allyl-4-phthalimidcarbonsäure

Zu einer Lösung/Suspension von 264,1 g (1,37 mol) Trimellitsäureanhydrid in 670 ml Veratrol werden bei 70°C 102 ml (1,36 mol) Allylamin so zugetropft, dass die Temperatur zuerst auf 80°C und dann langsam auf 100°C ansteigt, wobei die entstehende Amidsäure als weißer Niederschlag ausfällt. Unter fortgesetztem Rühren wird langsam weiter erhitzt bis das Reaktionswasser abdestilliert ist. Man rührt noch 15 Minuten unter Rückfluss, lässt dann abkühlen und zieht bei 130°C 500 ml Verartol im Teilvakuum ab. Anschließend werden 850 ml Toluol zugegeben, kurz unter Rückfluss erhitzt und dann auf Raumtemperatur abgekühlt. Das ausgefallene Allylimid wird abfiltriert und nochmals aus Toluol umkristallisiert. Ausbeute: 265,2 g (84%)

### b) Herstellung von N-Allyl-4-phthalimidcarbonylchlorid

Zu einer Suspension von 263,2 g (1,14 mol) N-Allyl-4-phthalimidcarbonsäure (a) in 500 ml Toluol werden bei 55°C 123,5 ml (1,46 mol) Oxalylchlorid innerhalb von 1 ½ Stunden zugetropft. Anschließend wird im Ölbad auf 100°C erhitzt. Die Innentemperatur steigt dabei von 80 auf 85°C an. Es wird noch 5 Stunden bei 85°C gerührt, wobei die Suspension aufschäumt und sich langsam dunkel färbt.

Dann wird das Lösemittel bei 50°C unter reduziertem Druck abgezogen und das erhaltene Produkt schließlich noch 30 Minuten im Ölpumpenvakuum getrocknet. Ausbeute: 293,2 g (100%)

### c) Herstellung von N-Allyl-4-phthalimidcarbonsäure-citronellolester

156,3 g (1,0 mol) Citronellol, 111,0 g (1,1 mol) Triethylamin und eine katalytische Menge (5,0 g) 4-Dimethylaminopyridin werden in 1000 ml Toluol vorgelegt. Zu dieser Lösung werden bei Raumtemperatur und unter Rühren 250,0 g (1,0 mol) N-Allyl-4-phthalimidcarbonylchlorid (b), gelöst in 600 ml Toluol innerhalb von 90 Minuten zugetropft, wobei die Innertemperatur auf 54°C ansteigt. Dann wird noch 3 Stunden unter Rückfluss erhitzt.

Nach dem Abkühlen wird auf 300 ml Eis / 100 ml konz. HCl gegossen (pH2). Die beiden Phasen werden getrennt und die organische Phase 2 x mit je 200 ml Wasser gewaschen, über Na₂SO₄ getrocknet, filtriert und bei 50°C im Teilvakuum am Rotationsverdampfer weitgehend eingeengt. Anschließend wird das Produkt noch ½ h bei 50°C im Ölpumpenvakuum getrocknet. Es entsteht ein rötlich-braunes Öl. Ausbeute: 332,5 g (90%)

### d) Selektive Sulfonierung von N-Allyl-4-phthalimidcarbonsäure-citronellolester mit Acetylsulfat zu N-Allyl-4-phthalimidcarbonsäure-3',7'-dimethyl-6'-sulfo-7'-octenolester

Zu 700 ml abs. Methylenchlorid werden 133 ml Acetanhydrid gegeben. Die Mischung wird im Eisbad auf 0°C gekühlt. Dann werden 48 ml konzentrierte Schwefelsäure so zudosiert, dass die Temperatur 10°C nicht übersteigt. Die Lösung ist 1 molar an Acetylsulfat.

295 g (0,8 mol) N-Allyl-4-phthalimidcarbonsäure-citronellolester (c) werden in 1000 ml abs. Methylenchlorid gelöst und auf 0°C abgekühlt. Bei dieser Temperatur werden 881 ml der zuvor hergestellten 1 molaren Acetylsulfat-Lösung zugetropft und noch 1½ Stunden bei 0°C gerührt.

Zur Aufarbeitung wird die Mischung auf 2 1 Eis gegossen. Die Phasen werden getrennt und die organische Phase 5 x mit 250 ml gesättigter Natriumchlorid-Lösung gewaschen, über Na₂SO₄ getrocknet, filtriert und das Lösemittel unter reduziertem Druck bei 50°C abgezogen. Anschließend wird noch 4 Stunden im Ölpumpenvakuum getrocknet. Es entsteht eine zähe, dunkelrote Substanz.
Ausbeute: 318,8 g (89%)

### e) Herstellung von Zink-bis(N-Allyl-4-phthalimidcarbonsäure-3',7'-dimethyl-6'-sulfonato-7'-octenolester) = Zinksulfonat-Additiv A

Zu 318,8 g (0,71 mol) N-Allyl-4-phthalimidcarbonsäure-3',7'-dimethyl-6'-sulfo-7'-octenolester (d), gelöst in 500 ml Methylenchlorid werden bei Raumtemperatur und unter Rühren 77,9 g (0,35 mol) Zinkacetat Dihydrat, gelöst in 500 ml Chloroform, zugetropft. Anschließend wird 1 h unter Rückfluss erhitzt und dann die Lösemittel sowie beispielsweise die gebildete Essigsäure bei einer Außentemperatur von 50°C zuerst unter reduziertem Druck und dann im Ölpumpenvakuum abgezogen. Ausbeute: 339,4 g (99%)

In diese erfindungsgemäße Mischung von Organopolysiloxan A und Zinksulfonat-Additiv A werden auf einem Laborwalzwerk bei einer Friktion von 1 : 1,1 während 10 min 1,2 Gew.-% des in Beispiel 1 beschriebenen Peroxidvernetzers A eingearbeitet.

Die so erhaltene, peroxidische Mischung wird anschließend in eine Pressform aus Edelstahl gefüllt und 15 Minuten bei 165°C und bei einem Druck von 5,45 MPa in einer Laborpresse vulkanisiert.

Die nach DIN 53504 - 85 / Normstab S1 gemessene Reißfestigkeit war 5,8 mal so hoch, wie die ebenfalls nach DIN 53504 - 85 / Normstab S1 gemessene Reißfestigkeit des Vulkanisats von Vergleichsbeispiel 1.

Die Reißdehnung des erfindungsgemäßen Vulkanisats aus Beispiel 1 war 12,1 mal so hoch wie die des Vulkanisats aus Vergleichsbeispiel 1.

### Beispiel 3

Es wird ein additionsvernetzbarer Kautschuk A folgender Zusammensetzung hergestellt:

96,4% Organopolysiloxan B, dies ein Polydiorganosiloxan der Formel (Me₂ViSiO_{1/2})₂(Me₂SiO)ₓ ist, mit einem durchschnittlichen Index x = 620 und das eine Viskosität von 20000 mPa s hat. 0,2% Organopolysiloxan C, dies ein Polydiorganosiloxan der Formel (Me₂ViSiO_{1/2})₂(Me₂SiO)ₓ(MeViSiO)_{y} ist, mit x>y, so dass im statistischen Mittel jedes 5te kettenständige Siliciumatom eine Vinylgruppe trägt und das eine Viskosität von 1000 mPa s hat. 2,5% Organopolysiloxan D, dies ein Polydiorganosiloxan der Formel (Me₃SiO_{1/2})₂(Me₂SiO)ₓ(MeHSiO)_{y} ist, mit x>y, so dass im statistischen Mittel jedes dritte kettenständige Siliciumatom eine SiH-Bindung aufweist und das eine Viskosität von 1000 mPa s hat. 0,23 g eines Inhibitors, der zu 80% aus Ethinylcyclohexanol und zu 20% aus Trimethylsilanol besteht. 0,8% Trimethylsilanol und 0,1% einer Lösung eines Platinkomplexes mit sym-Divinyltetramethyldisiloxan (Karstedt-Katalysator) in Organopolysiloxan E, dies ein Polydiorganosiloxan der Formel (Me₂ViSiO_{1/2})₂(Me₂SiO)ₓ ist, mit einem durchschnittlichen Index x = 220 und das eine Viskosität von 1000 mPa s hat, dergestalt, dass der Gehalt an Platin 1%, bezogen auf das Metall, ist.

In diesen Kautschuk A werden mittels eines Laborrührers 20,6% Zinkundecylenat und 20,6% Organopolysiloxan D, jeweils bezogen auf 100% Kautschuk A eingearbeitet. Die weitere Zugabe von Organopolysiloxan D ist erforderlich, um in der Mischung ein molares Verhältnis von SiH-Gruppen zu aliphatischen Doppelbindungen von 2 : 1 einzustellen.

Die so erhaltene, additionsvernetzbare Mischung wird anschließend in eine Pressform aus Edelstahl gefüllt und 10 Minuten bei 170°C und bei einem Druck von 5,45 MPa in einer Laborpresse vulkanisiert.

Die nach DIN 53504 - 85 / Normstab S1 gemessene Reißfestigkeit war 5,2 mal so hoch, wie die ebenfalls nach DIN 53504 - 85 / Normstab S1 gemessene Reißfestigkeit des Vulkanisats von Vergleichsbeispiel 2.

Die Reißdehnung des erfindungsgemäßen Vulkanisats aus Beispiel 3 war gleich groß wie die des Vulkanisats aus Vergleichsbeispiel 2.

### Vergleichsbeispiel 2

Die additionsvernetzbare Mischung des oben in Beispiel 3 beschriebenen Kautschuks A wird in eine Pressform aus Edelstahl gefüllt und 10 Minuten bei 170°C und bei einem Druck von 5,45 MPa in einer Laborpresse vulkanisiert.

Die Reißfestigkeit wird nach DIN 53504 - 85 / Normstab S1 gemessen.

### Beispiel 4

In den in Beispiel 3 beschriebenen Kautschuk A werden mittels eines Laborrührers 11% eines Poly(bis(acetoacetoxypropyl-polydimethyl-co-polymethylvinylsiloxan)-Titan-diisopropoxids) und 9,7% Organopolysiloxan D, jeweils bezogen auf 100% Kautschuk A eingearbeitet. Die weitere Zugabe von Organopolysiloxan D ist erforderlich, um in der Mischung ein molares Verhältnis von SiH-Gruppen zu Silicium-gebundenen Vinylgruppen von 2 : 1 einzustellen.

Das Poly(bis(acetoacetoxypropyl-polydimethyl-co-polymethylvinylsiloxan)-Titan-diisopropoxid) wird wie in den nachfolgend beschriebenen Schritten a) bis e) hergestellt:

### a) Herstellung von 1,1-Dimethyl-1-sila-2-oxa-cyclopentan

Die Herstellung von 1,1-Dimethyl-1-sila-2-oxa-cyclopentan ist beschrieben in der Patentschrift DE 102 06 121 C1.

### b) Herstellung von sym-Dihydroxypropyltetramethyldisiloxan

111,3 g (0,96 mol) 1,1-Dimethyl-1-sila-2-oxa-cyclopentan (a) werden unter Eiskühlung und Rühren vorgelegt. Dazu werden langsam 10,2 g (0,56 mol) deionisiertes Wasser während 13 Minuten getropft, wobei die Temperatur auf 23°C ansteigt. Anschließend wird das Eisbad entfernt und noch 2 Stunden bei 28°C gerührt. Ausbeute: 120,7 g (99%)

### c) Herstellung von sym-Bisacetoacetoxypropyltetramethyldisiloxan

Zu 224,4 g (0,9 mol) sym-Dihydroxypropyltetramethyldisiloxan (b) und 6 Tropfen Triethylamin werden bei 85°C langsam während 90 Minuten 165,0 g (1,96 mol) frisch destilliertes Diketen derart zugetropft, dass die Innentemperatur zwischen 85 und 95°C liegt. Dann wird noch 90 Minuten bei 85°C gerührt, 30 ml Methanol zugegeben und weitere 60 Minuten bei dieser Temperatur gerührt. Zunächst wird unter reduziertem Druck und schließlich für 1 Stunde bei 120°C im Ölpumpenvakuum überschüssiges Methanol, Methylacetoacetat und andere flüchtige Bestandteile abgezogen. Ausbeute: 357,8 g (95%)

### d) Herstellung von Acetoacetoxypropyl-polydimethyl-copolymethylvinylsilioxan

Unter einer Stickstoffatmosphäre und unter Rühren werden zu einer Mischung von 45,3 g Bisacetoacetoxypropyltetramethyldisiloxan (c) und 172 g des in Beispiel 3 beschriebenen Organopolysiloxans C 0,4 ml Trifluormethansulfonsäure gegeben. Dann wird unter Rühren 4 Stunden auf 80°C erhitzt. Man lässt auf Raumtemperatur abkühlen und versetzt die Reaktionsmischung mit 15 g Filterhilfe Tonsil Optimum FH (pH 10) und rührt noch 30 Minuten. Dann wird abfiltriert und das Filtrat im Ölpumpenvakuum von flüchtigen Bestandteilen befreit. Ausbeute: 159,1 g (73%). Laut ¹H und ²⁹Si-NMR-Spektrum hat das Polymer (d) die durchschnittliche Zusammensetzung (Me₂SiO)_{15.1} (MeViSiO)_{4.2} (Me₂ViSiO_{1/2})_{0.2} (Me(CH₂CH₂CH₂-O-(CO)CH₂(CO)CH₃)SiO_{1/2})_{1.7} (Me₂(OH)SiO_{1/2})_{0.1}

### e) Herstellung des Poly(bis(acetoacetoxypropyl-polydimethyl-co-polymethylvinylsiloxan)-Titan-diisopropoxids)

Unter Rühren werden zu 5,1 g (17,8 mmol) Titan(IV)-isopropoxid 38 g (20 mmol) Acetoacetoxypropyl-polydimethyl-copolymethylvinylsilioxan (d) getropft. Dann wird auf 75°C erhitzt und noch 2 Stunden bei dieser Temperatur gerührt. Anschließend werden bei 75°C im Ölpumpenvakuum alle flüchtigen Bestandteile abgezogen. Ausbeute: 37,7 g (92%) eines gummiartigen Hochpolymers.

Die erhaltene, additionsvernetzbare Mischung aus Kautschuk A, Poly(bis(acetoacetoxypropyl-polydimethyl-co-polymethylvinylsiloxan)-Titan-diisopropoxid) und Organopolysiloxan D wird anschließend in eine Pressform aus Edelstahl gefüllt und 10 Minuten bei 170°C und bei einem Druck von 5,45 MPa in einer Laborpresse vulkanisiert.

Die nach DIN 53504 - 85 / Normstab S1 gemessene Reißfestigkeit war 1,7 mal so hoch, wie die ebenfalls nach DIN 53504 - 85 / Normstab S1 gemessene Reißfestigkeit des Vulkanisats von Vergleichsbeispiel 2.

Die Reißdehnung des erfindungsgemäßen Vulkanisats aus Beispiel 4 war gleich groß wie die des Vulkanisats aus Vergleichsbeispiel 2.

## Patentansprüche

1. Vernetzbare Siliconmassen enthaltend
A1) 100 Gewichts-Teile mindestens eines Polydiorganosiloxans der allgemeinen durchschnittlichen Formel (I)
**R¹ₐ R²_{b} R³_{c} R⁴_{d} SiO_{(4-a-b-c-2d)/2}** (I)
worin
R¹ jeweils unabhängig voneinander, monovalente, unsubstituierte oder halogensubstituierte Kohlenwasserstoffreste mit 1 bis 20 Kohlenstoffatomen, die frei von aliphatisch ungesättigten Gruppen sind und Heteroatome enthalten können,
R² gleiche oder verschiedene, monovalente, aliphatisch ungesättigte, unsubstituierte oder halogensubstituierte Kohlenwasserstoffreste mit 2 bis 20 Kohlenstoffatomen, die Heteroatome enthalten können und einer radikalischen Vernetzung oder einer Hydrosilylierungsreaktion zugänglich sind,
R³ monovalente Reste ausgewählt aus der Gruppe der β- Ketocarbonylverbindungen,
R⁴ divalente Reste der allgemeinen Formel (II)
**R⁵ Lₓ M L_{y} R⁵** (II)
worin
R⁵ divalente, von aliphatischen Kohlenstoff- Kohlenstoff-Mehrfachbindungen freie, unsubstituierte oder substituierte Kohlenwasserstoffreste mit 2 bis 20 Kohlenstoffatomen, die an einer oder an beiden Valenzen über ein Sauerstoffatom verfügen können,
L funktionelle Gruppen, ausgewählt aus der Gruppe der β-Ketocarbonylverbindungen, die an R⁵ kovalent gebunden und an M ionisch, organometallisch oder ebenfalls kovalent gebunden sind,
M ein Metallatom, Metallion oder eine ionische Gruppe und
x 0 oder 1
y 0 oder 1
mit
R⁵ der Maßgabe bedeuten, dass für x = 0 oder y = 0 direkt an M gebunden ist,
a eine Zahl zwischen 1,6 und 2,0,
b eine Zahl zwischen 0 und 0,2,
c Null oder eine Zahl zwischen 0,001 und 0,2 und
d Null oder eine Zahl zwischen 0,001 und 0,2,
mit der Maßgabe bedeuten, dass bei Abwesenheit von Bestandteil A2 zumindest eine der Zahlen c und d verschieden von Null ist und c+d ≥ 0.001 gilt,
A2) 0 - 60 Gruppen Gewichtsteile mindestens einer ionische, organometallische oder ionische und organometallische aufweisende Verbindung der allgemeinen Formel
**R² Lₓ M L_{y} R²** (III)
B) worin R², L, x, y und M die zuvor beschriebene Bedeutung haben, 1 - 20 Gewichtsteile mindestens eines Vernetzungsmittels,
C) 0 - 200 Gewichtsteile verstärkende Füllstoffe oder nicht verstärkende Füllstoffe,
D) 0 - 100 Gewichtsteile Katalysator und
E) 0 - 100 Gewichtsteile weiterer Bestandteile ausgewählt aus der Gruppe enthaltend Farbpigmente, Katalysatoren, Inhibitoren, Weichmacher, Lösemittel, Stabilisatoren, flammhemmende Zusätze, Haftvermittler, Siliconharze, Entformbarkeitsadditive, Antistatika, Mikrohohlkugeln, Treibmittel, Abhäsivität regulierende Additive, die thermische oder elektrische Leitfähigkeit erhöhende Additive und deren Mischungen.

2. Vernetzbare Siliconmassen gemäß Anspruch 1, **dadurch gekennzeichnet, dass** die ionischen oder organometallischen Funktionalitäten als Additiv einer vernetzbaren Siliconkautschukzusammensetzung zugesetzt und über Valenzen an ein Polydiorganosiloxan in-situ gebunden werden, so dass intermediär ein Polydiorganosiloxan A1 der allgemeinen Formel (I) entsteht.

3. Vernetzbare Siliconmassen gemäß Anspruch 1, **dadurch gekennzeichnet, dass** das ionische, organometallische oder ionische und organometallische Gruppen aufweisende Additiv A2 der allgemeinen Formel (III) mit einem Polydiorganosiloxan der allgemeinen durchschnittlichen Formel (IV)
**R¹ₑ R²_{f} SiO_{(4-e-f)/2}** (IV)
umgesetzt, worin
e eine Zahl zwischen 1,9 und 2,0 und
f eine Zahl zwischen 0 und 0,1 ist
und R¹ und R² die in Formel (I) angegebenen Bedeutungen haben.

4. Vernetzbare Siliconmassen gemäß einem der Ansprüche 1 bis 3, **dadurch gekennzeichnet, dass** das Vernetzungsmittel (B) ausgewählt ist aus der Gruppe enthaltend eine radikalischinitiierte (B1), eine Additionsvernetzung/Hydrosilylierung (B2) oder eine durch Ausbildung coulombscher oder koordinativer Wechselwirkungen erfolgende Vernetzung (B3) bewirkende Verbindung.

5. Vernetzbare Siliconmassen gemäß Anspruch 4, **dadurch gekennzeichnet, dass** das Vernetzungsmittel (B1) von 0,1 bis 5 Gew.-% enthalten ist und ein organisches Peroxid oder eine Mischung organischer Peroxide darstellt, das Vernetzungsmittel (B2) von 1 bis 20 Gew.-% enthalten ist und eine über mindestens drei Si-gebundene Wasserstoffatome verfügende siliziumorganische Verbindung darstellt, und das Vernetzungsmittel (B3) von 0,1 bis 20 Gew.-% enthalten ist und ein Metallsalz anorganischer oder organischer Säuren darstellt.

6. Vernetzbare Siliconmassen gemäß einem der Ansprüche 1 bis 5, **dadurch gekennzeichnet, dass** die vernetzten Siliconmassen nach Vernetzung eine mechanische Bindungsfestigkeit zwischen 500 pN und 4 nN aufweisen.

7. Ionisch, organometallisch oder ionisch und organometallisch funktionalisierte Polydiorganosiloxane (A1) der allgemeinen Formel (I) aufweisend
a) einen mittleren Polymerisationsgrad zwischen 20 und 10 000,
b) zwischen 0 und 20 Mol-% alkenylfunktioneller Organosiloxy-Einheiten,
c) zwischen 0,1 und 20 Mol-% monovalenter ionischer, organometallisch oder ionisch und organometallisch funktionalisierter Organosiloxy-Einheiten und
d) zwischen 0,1 und 20 Mol-% divalenter ionischer, organometallisch oder ionisch und organometallisch funktionalisierter Organosiloxy-Einheiten.

8. Siliconelastomere erhalten durch Vernetzung der Siliconmassen gemäß einem der Ansprüche 1 bis 6.

9. Verfahren zur Herstellung der Siliconelastomere gemäß Anspruch 8, **dadurch gekennzeichnet, dass** die Siliconmasse gemäß einem der Ansprüche 1 bis 6 drucklos bei Raumtemperatur oder bei erhöhter Temperatur drucklos oder unter erhöhtem Druck vernetzt wird.

10. Verwendung der Siliconelastomere gemäß Anspruch 8 im Automobilbau, in der Elektronik und Elektrotechnik, in der Luft- und Raumfahrt, in der Medizintechnik, zur Haushaltsgeräteherstellung, im Maschinen- und Gerätebau sowie in der Papier- und Folienbeschichtung.

## Claims

1. Crosslinkable silicone compositions comprising
A1) 100 parts by weight of at least one polydiorganosiloxane of the general average formula (I)
**R¹ₐ R²_{b} R³_{c} R⁴_{d} SiO_{(4-a-b-c-2d)/2}** (I)
where
the radicals R¹ are, in each case independently of one another, monovalent, unsubstituted or halogen-substituted hydrocarbon radicals which have from 1 to 20 carbon atoms and are free of aliphatically unsaturated groups and may contain heteroatoms, the radicals R² are identical or different, monovalent, aliphatically unsaturated, unsubstituted or halogen-substituted hydrocarbon radicals which have from 2 to 20 carbon atoms, may contain heteroatoms and are capable of undergoing free-radical crosslinking or a hydrosilylation reaction, the radicals R³ are monovalent radicals selected from the group consisting of β -ketocarbonyl compounds, the radicals R⁴ are divalent radicals of the general formula (II)
**R⁵ Lₓ M L_{y} R⁵** (II)
where
the radicals R⁵ are divalent, unsubstituted or substituted hydrocarbon radicals which are free of aliphatic carbon-carbon multiple bonds and have from 2 to 20 carbon atoms and may have an oxygen atom on one or both valences, the radicals L are functional groups selected from the group consisting of β-ketocarbonyl compounds, which are bound covalently to R⁵ and are bound ionically, organometallically or likewise covalently to M,
M is a metal atom, metal ion or an ionic group and
x is 0 or 1,
y is 0 or 1,
with the proviso that when x = 0 or y = 0, R⁵ is bound directly to M,
a is from 1.6 to 2.0,
b is from 0 to 0.2,
c is zero or from 0.001 to 0.2 and
d is zero or from 0.001 to 0.2,
with the proviso that in the absence of constituent A2, at least one of the indices c and d is not zero and c + d ≥ 0.001,
A2) 0 - 60 parts by weight of at least one compound of the general formula (III) having ionic, organometallic or ionic and organo- metallic groups
**R² Lₓ M L_{y}, R²** (III)
where R², L, x, y and M are as defined above,
B) 1 - 20 parts by weight of at least one crosslinker,
C) 0 - 200 parts by weight of reinforcing fillers or nonreinforcing fillers,
D) 0 - 100 parts by weight of catalyst and
E) 0 - 100 parts by weight of further con- stituents selected from the group consisting of colour pigments, catalysts, inhibitors, plasticizers, solvents, stabilizers, flame- retardant additives, coupling agents, silicone resins, mould release agents, antistatics, hollow microspheres, blowing agents, antistick regulating additives, additives which increase the thermal or electrical conductivity and mixtures thereof.

2. Crosslinkable silicone compositions according to Claim 1, **characterized in that** the ionic or organometallic functions are added as additive to a crosslinkable silicone rubber composition and bound in-situ via valences to a polydiorganosiloxane so as to form a polydiorganosiloxane A1 of the general formula (I) as intermediate.

3. Crosslinkable silicone compositions according to Claim 1, **characterized in that** the additive A2 of the general formula (III) which has ionic, organometallic or ionic and organometallic groups is reacted with a polydiorganosiloxane of the general average formula (IV)
**R¹ₑ R²_{f} SiO_{(4-e-f)/2}** (IV)
where
e is from 1.9 to 2.0 and
f is from 0 to 0.1
and R¹ and R² have the meanings given for formula (I).

4. Crosslinkable silicone compositions according to any of Claims 1 to 3, **characterized in that** the crosslinker (B) is selected from the group consisting of compounds which effect free-radically initiated crosslinking (B1), compounds which effect addition crosslinking/hydrosilylation (B2) and compounds which effect crosslinking by formation of coulombic or coordinative interactions (B3).

5. Crosslinkable silicone compositions according to Claim 4, **characterized in that** the crosslinker (B1) is present in an amount of from 0.1 to 5% by weight and is an organic peroxide or a mixture of organic peroxides, the crosslinker (B2) is present in an amount of from 1 to 20% by weight and is an organosilicon compound having at least three Si-bonded hydrogen atoms and the crosslinker (B3) is present in an amount of from 0.1 to 20% by weight and is a metal salt of inorganic or organic acids.

6. Crosslinkable silicone compositions according to any of Claims 1 to 5, **characterized in that** the crosslinked silicone compositions have a mechanical bond strength in the range from 500 pN to 4 nN after crosslinking.

7. Ionically, organometallically or ionically and organometallically functionalized polydiorganosiloxanes (A1) of the general formula (I) having
a) an average degree of polymerization in the range from 20 to 10 000,
b) from 0 to 20 mol% of alkenyl-functional organosiloxy units,
c) from 0.1 to 20 mol% of monovalent ionically, organometallically or ionically and organometallically functionalized organosiloxy units and
d) from 0.1 to 20 mol% of divalent ionically, organometallically or ionically and organometallically functionalized organosiloxy units.

8. Silicone elastomers obtained by crosslinking of the silicone compositions according to any of Claims 1 to 6.

9. Process for producing the silicone elastomers according to Claim 8, **characterized in that** the silicone composition according to any of Claims 1 to 6 is crosslinked at room temperature under atmospheric pressure or at elevated temperature under atmospheric pressure or under applied pressure.

10. Use of the silicone elastomers according to Claim 8 in automobile construction, in electronics and electrical engineering, in the aerospace industry, in medical technology, for the production of domestic appliances, in machine and instrument construction and in paper and film coating.

## Revendications

1. Matières silicone réticulables, contenant
A1) 100 parties en poids d'au moins un polydiorganosiloxane de formule moyenne générale (I)
**R¹ₐ R²_{b} R³_{c} R⁴_{d} SiO_{(4-a-b-c-2d)/2}** (I)
dans laquelle
R¹ représente chaque fois indépendamment les uns des autres des radicaux hydrocarbonés monovalents, non substitués ou substitués par halogène, ayant de 1 à 20 atomes de carbone, qui sont exempts de groupes à insaturation aliphatique et peuvent contenir des hétéroatomes,
R² représente des radicaux hydrocarbonés identiques ou différents, monovalents, à insaturation aliphatique, non substitués ou substitués par halogène, ayant de 2 à 20 atomes de carbone, qui peuvent contenir des hétéroatomes et sont susceptibles de subir une réticulation radicalaire ou une réaction d'hydrosilylation,
R³ représente des radicaux monovalents choisis dans le groupe des composés β-cétocarbonyle,
R⁴ représente des radicaux divalents de formule générale (II)
**R⁵ Lₓ M L_{y} R⁵** (II)
dans laquelle
R⁵ représente des radicaux hydrocarbonés divalents, substitués ou non substitués, exempts de liaisons multiples carbone- carbone aliphatiques, ayant de 2 à 20 atomes de carbone, qui peuvent être dotés d'un atome d'oxygène sur l'une des deux valences ou les deux,
L représente des groupes fonctionnels, choisis dans le groupe des composés β -cétocarbonyle, qui sont liés par covalence à R⁵ et sont liés à M par une liaison ionique, organométallique ou également par covalence,
M représente un atome métallique, un ion métallique ou un groupe ionique et
x vaut 0 ou 1
y vaut 0 ou 1
étant entendu que pour x = 0 ou y = 0, R⁵ est lié directement à M,
a représente un nombre compris entre 1,6 et 2,0,
b représente un nombre compris entre 0 et 0,2,
c représente zéro ou un nombre compris entre 0,001 et 0,2 et
d représente zéro ou un nombre compris entre 0,001 et 0,2,
étant entendu qu'en l'absence du composant A2 au moins l'un des nombres c et d est différent de zéro et c+d est ≥ 0,001.
A2) 0 - 60 parties en poids d'au moins un composé de formule générale (III) comportant des groupe sioniques, organométalliques ou ioniques et organométalliques
**R² Lₓ M L_{y} R²** (III)
dans laquelle R², L, x, y et M ont la signification décrite précédemment,
B) 1 - 20 parties en poids d'au moins un agent de réticulation,
C) 0 - 200 parties en poids de charges de renfort ou de charges non de renfort,
D) 0 - 100 parties en poids de catalyseur et
E) 0 - 100 parties en poids d'autres composants choisis dans le groupe contenant des pigments colorés, des catalyseurs, des inhibiteurs, des plastifiants, des solvants, des stabilisants, des additifs ignifuges, des promoteurs d'adhérence, des résines silicone, des additifs de démoulage, des agents antistatiques, des microbilles creuses, des agents d'expansion, des additifs régulant le pouvoir antiadhésif, des additifs augmentant la conductibilité thermique ou électrique et des mélanges de ceux-ci.

2. Matières silicone réticulables selon la revendication 1, **caractérisées en ce que** les fonctionnalités ioniques ou organométalliques sont ajoutées sous forme d'additif à une composition de caoutchouc silicone réticulable et sont liées in situ par des valences à un polydiorganosiloxane, de sorte qu'il en résulte intermédiairement un polydiorganosiloxane A1 de formule générale (I).

3. Matières silicone réticulables selon la revendication 1, **caractérisées en ce qu'**on fait réagir l'additif A2 de formule générale (III), comportant des groupes ioniques, organométalliques ou ioniques et organométalliques, avec un polydiorganosiloxane de formule moyenne générale (IV)
**R¹ₑ R²_{f} SiO_{(4-e-f)/2}** (IV)
dans laquelle
e est un nombre compris entre 1,9 et 2,0 et
f est un nombre compris entre 0 et 0,1
et R¹ et R² ont les significations indiquées dans la formule (I).

4. Matières silicone réticulables selon l'une quelconque des revendications 1 à 3, **caractérisées en ce que** l'agent de réticulation (B) est choisi dans le groupe contenant un composé provoquant une réticulation à amorçage radicalaire (B1), un composé provoquant une réticulation par addition/hydrosilylation (B2) ou un composé provoquant une réticulation effectuée par formation d'interactions coulombiennes ou de coordination (B3).

5. Matières silicone réticulables selon la revendication 4, **caractérisées en ce que** l'agent de réticulation (B1) est contenu à raison de 0,1 à 5 % en poids et représente un peroxyde organique ou un mélange de peroxydes organiques, l'agent de réticulation (B2) est contenu à raison de 1 à 20 % en poids et représente un composé organosilicié doté d'au moins trois atomes d'hydrogène liés à Si, et l'agent de réticulation (B3) est contenu à raison de 0,1 à 20 % en poids et représente un sel métallique d'acides organiques ou inorganiques.

6. Matières silicone réticulables selon l'une quelconque des revendications 1 à 5, **caractérisées en ce que** les matières silicone réticulées présentent après réticulation une résistance de liaison mécanique comprise entre 500 pN et 4 nN.

7. Polydiorganosiloxanes (A1) de formule générale (I) à fonctionnalisation ionique, organométallique ou ionique et organométallique, comportant
a) un degré de polymérisation moyen compris entre 20 et 10 000,
b) entre 0 et 20 % en moles d'unités organosiloxy à fonction alcényle,
c) entre 0,1 et 20 % en moles d'unités organosiloxy monovalentes à fonctionnalisation ionique, organométallique ou ionique et organométallique et
d) entre 0,1 et 20 % en moles d'unités organosiloxy divalentes munies de fonctionnalité ionique, organométallique ou ionique et organométallique.

8. Élastomères silicone obtenus par réticulation des matières silicone selon l'une quelconque des revendications 1 à 6.

9. Procédé pour la production des élastomères silicone selon la revendication 8, **caractérisé en ce que** la matière silicone selon l'une quelconque des revendications 1 à 6 est réticulée sans pression à la température ambiante ou à une température élevée sans pression ou sous une pression élevée.

10. Utilisation des élastomères silicone selon la revendication 8, dans la construction automobile, dans l'électronique et l'électrotechnique, dans l'aéronautique et l'astronautique, dans la technologie médicale, pour la fabrication d'appareils ménagers, dans la construction de machines et d'appareils ainsi que dans le couchage du papier et de films.
